# EUROPÄISCHE PATENTSCHRIFT

(11) **EP 0 901 435 B1**
(45) Veröffentlichungstag und Bekanntmachung des Hinweises auf die Patenterteilung: **06.12.2000**
(21) Anmeldenummer: 97927131.9
(22) Anmeldetag: 04.06.1997
(51) Int. Cl.: B60S 1/48, B60S 1/50

(54) **Verfahren und Vorrichtung zur Erwärmung der Waschflüssigkeit für die Scheibenwischanlage**
Process and device for heating windscreen washer liquid
Procédé et dispositif pour chauffer le liquide de lave-glace d'un système d'essuie-glace

(30) Priorität: 04.06.1996 CH 139996
(43) Veröffentlichungstag der Anmeldung: 17.03.1999
(73) Patentinhaber: Mannesmann VDO Aktiengesellschaft, 60388 Frankfurt am Main (DE); Bains, Rashpal, 8586 Erlen (CH)
(72) Erfinder: BAINS, Rashpal, CH-8586 Erlen (CH)
(74) Vertreter: Klein, Thomas, Dipl.-Ing.
(86) Internationale Anmeldenummer: EP9702902
(87) Internationale Veröffentlichungsnummer: WO9746431

(56) Entgegenhaltungen:
- FR-A- 2 419 849
- US-A- 4 090 668
- US-A- 5 509 606
- PATENT ABSTRACTS OF JAPAN vol. 014, no. 221 (M-0971), 10.Mai 1990 & JP 02 053656 A (FUMIO FUJIHIRA;OTHERS: 01), 22.Februar 1990,
- PATENT ABSTRACTS OF JAPAN vol. 008, no. 096 (M-294), 4.Mai 1984 & JP 59 011949 A (ISAMU UCHIDA), 21.Januar 1984,

## Beschreibung

Die Erfindung betrifft eine Thermal-Scheibenwaschanlage zur Erwärmung der Waschflüssigkeit für die Scheibenwischanlage von Fahrzeugen.

Es ist eine Erfahrungssache, daß die Wirksamkeit einer Waschflüssigkeit wesentlich stärker ist, wenn das Wasser warm oder sogar heiß ist. Dies gilt auch bei Scheibenwaschanlagen von Fahrzeugen. Bei Fahrzeugen kommt hinzu, daß sich in der kälteren Jahreszeit an der Scheibe eine dünne Eisschicht bildet. Bei Verbrennungsmotoren entsteht im Betrieb eine große Überschußwärme, die wenigsten im Winter für die Heizung des Fahrzeuginnenraumes sowie für die Erwärmung der Waschflüssigkeit verwendet werden kann. Da der Fahrzeuginnenraum oft aber keine Heizung benötigt, müssen für beide Funktionen getrennte Leitungssysteme vorgesehen werden. Das Heizen des Waschwassers über die Motorwärme setzt eine gewisse Betriebszeit des Verbrennungsmotors voraus. Beim Kaltstart eines Fahrzeuges steht deshalb vor allem in der kalten Jahreszeit kein erwärmtes Waschwasser zur Verfügung. Für das Enteisen der Fahrzeugscheibe muß der Motor jeweils eine gewisse Zeit im Leerlauf laufen gelassen werden, bis das Waschwasser eine genügende Temperatur hat. Das hat Luftverschmutzung zur Folge.

Mit der CH-PA Nr. 01 492/92-7 der Anmelderin wurde vorgeschlagen, diese Situation dadurch zu verbessern, daß für die Waschanlage ein zusätzlicher Thermobehälter vorgesehen wir, in dem nun bereits erhitztes Waschwasser gespeichert werden kann. Es wurde von der Tatsache ausgegangen, daß während der Fahrt Heizenergie insbesondere elektrische Energie im Überfluß verfügbar ist, so daß diese in einem Thermobehälter speicherbar ist. Der Thermobehälter kann derart nach außen isoliert werden, daß er sogar über Nacht warm bleibt, so daß eine gefrorene Scheibe am Morgen, oder jederzeit während dem Tag auf einem Parkplatz eisfrei gemacht werden kann. Mit einer längeren Erprobung konnte die Funktionsfähigkeit des Thermobehälters unter Beweis gestellt werden. Nachteilig bei dem Thermobehälter ist dessen Größe, so daß das entsprechende Speichervolumen nur bei größeren Fahrzeugtypen eingebaut werden kann. Vom Erfinder ist nun aber erkannt worden, daß bei allen Lösungen des Standes der Technik nur ein Teil der Scheibenwaschprobleme berücksichtigt wurde. In erster Linie wurden die Winterprobleme angegangen. In der Übergangszeit, besonders aber bei nassen Fahrbahnen setzt sich nicht nur Straßenstaub sondern regelmäßig auch ein salziger und/oder öliger Belag auf der Scheibe an. An trockenen Sommertagen sind es tote Mücken, die durch das Eiweiß nicht leicht zu entfernen sind. Beim Einschalten der Scheibenwischanlage verschmiert sich das ganze oft, dies obwohl das Waschwasser ein chemisches Waschmittel enthält.

Die US-A-4 090 668 zeigt eine Thermal-Scheibenwaschanlage, bei der Waschflüssigkeit aus einem Reservetank entnommen und von einer Pumpe zu einem Instantheizelement gefördert wird. Der Reservetank befindet sich im Motorraum des Fahrzeuges, so daß damit auch das Instantheizelement im Motorraum angeordnet ist. Aufgrund dieser Anordnung ist es erforderlich, die von dem Instantheizelement erwärmte Waschflüssigkeit über eine sehr weite Entfernung über Verbindungsleitungen zu den Spritzdüsen zu führen. Dadurch wird der Grundgedanke, eine heiße Waschflüssigkeit zur effektiven Reinigung der Scheibe des Fahrzeuges zu verwenden, zunichte gemacht, da sich die erwärmte Waschflüssigkeit auf dem Weg durch die Verbindungsleitungen zu den Spritzdüsen wieder abkühlt. Weiterhin ist es hierbei vorgesehen, daß in dem Reservetank noch ein Wärmetauscher vorgesehen ist, der von der Kühlflüssigkeit des Kühlkreislaufes des Motors des Fahrzeuges durchströmt wird. Im Anfangszustand, wenn die Kühlflüssigkeit noch kalt ist, wird von dieser die in dem Instantheizelement erzeugte Wärme mit abgeführt, so daß nach wie vor der Nachteil bestehen bleibt, das gerade bei kaltem Motor des Fahrzeuges noch keine warme Waschflüssigkeit zur Verfügung steht.

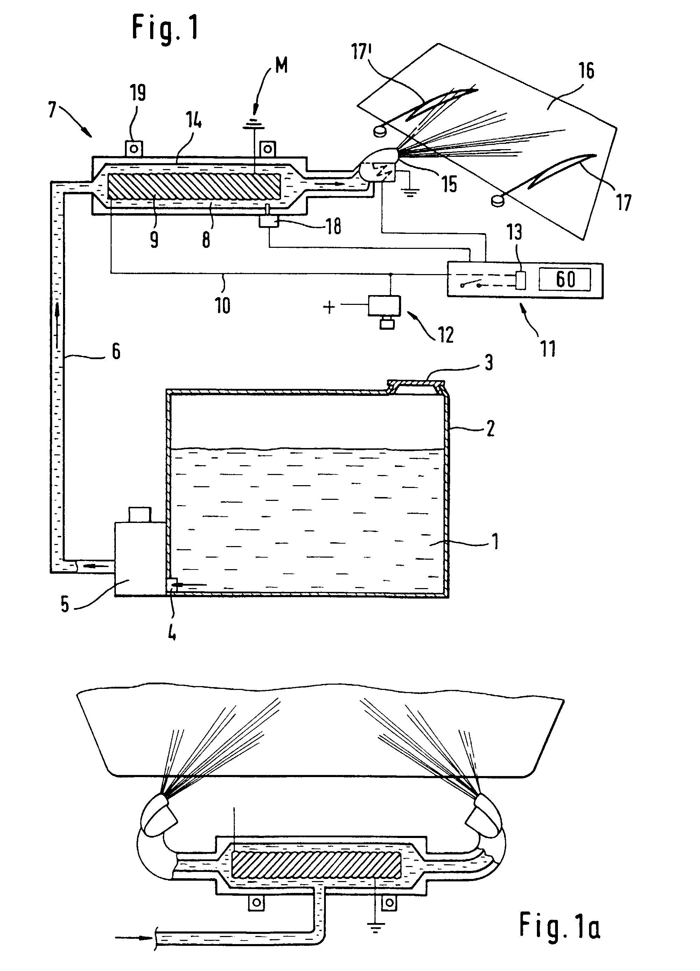

Bei der gattungsbildenden US-A-5 509 606 wird von einer Pumpe die aus einem Reservetank entnommene Reinigungsflüssigkeit einem Heizelement zugeführt. Bei dem in der Figur 1 gezeigten Aufbau wird die erwärmte Waschflüssigkeit über eine Schlauchleitung, ein T-Stück und lange Schlauchleitungen zwischen dem T-Stück und den Spritzdüsen diesen zugeführt. Auch hier ist wieder der Nachteil gegeben, daß sich die erwärmte Waschflüssigkeit auf dem Weg von dem Heizelement zu den Spritzdüsen abkühlt und an den Spritzdüsen Waschflüssigkeit abgespritzt wird, die für die effektive Reinigung nicht ausreichend warm oder erhitzt ist.

Der Erfindung wurde nun die Aufgabe gestellt, das Scheibenwaschproblem für alle Jahreszeiten insbesondere auch für alle Fahrzeugtypen besser lösen zu können.

Diese Aufgabe ist durch die Merkmale des Patentanspruches 1 gelöst.

Es zeigte sich, daß in der weit überwiegenden Zahl der Scheibenwischprobleme diese nicht darin bestehen, daß kübelweise Waschflüssigkeit benötigt wird. Vielmehr muss nur eine benötigte Gebrauchsmenge der Waschflüssigkeit warm oder heiss sein, damit sich die Schmutzpartikel im Seifenwasser bzw. chemischem Waschmittelzusatz lösen. Dies bedeutet aber, dass es normalerweise genügt, wenn ein oder wenige Male warmes oder heisses Waschwasser auf die Scheibe gespritzt wird, damit die Schmutz-, Salz-, Oel- und Eiweissbestandteile in die Waschflüssigkeit übergehen. Der Rest der Reinigung kann, wenn dies noch erforderlich ist, genau so gut mit kälterem bzw. nur lauwarmem Wasser erfolgen. Die Folgerung daraus ist aber, dass nur für einige Spritzbetätigungen weit weniger als ein Deziliter, meistens nur einige Kubikzentimeter also nur Kleinmengen benötigt werden. Genau hier setzt die neue Erfindung an. Erfindungsgemäss werden nur Kleinmengen erwärmt, mit dem enormen Vorteil, dass Kleinmengen von einigen cm³ z.Bsp. 5 bis 20 cm³ innert 5 bis 10 Sekunden erwärmt werden können. Damit gelingt es in der Zeitspanne von dem Einsteigen in das Fahrzeug bis zum Losfahren für eine erste Scheibenreinigung genug warmes Wasser zur Verfügung gestellt werden kann. Muss die Scheibe während dem Fahren gereinigt werden, so steht eine Gebrauchsmenge von z.Bsp. 5 bis 100 cm3 heisses bzw. warmes Wasser zur Verfügung. Das Scheibenwaschen kann nun in Intervallen vorgenommen werden. Eine erste Reinigung erfolgt unabhängig der Jahreszeit mit heissem oder warmem Wasser. Hat der Schmutz sehr schwierig zu beseitigende Anteile, kann nach der heissen Waschung einige Male kälter nachgespült werden. Genügt auch dies nicht, so kann z.Bsp. nach einer halben Minute das Spiel ein oder zwei mal wiederholt werden. Das Waschwasser, weil es im Sekundenbereich erwärmbar ist, wird im Sinne einer Instantheizung erwärmt, da im Verhältnis zur Nutzung nahezu keine Wartezeit benötigt wird.

Die Erfindung erlaubt eine ganze Anzahl sehr vorteilhafter Ausgestaltungen. Die Kleinmenge wird in einem Instantheizkanal bevorzugt elektrisch erwärmt und durch Pumpförderung aus einem Waschwasserreservetank und entsprechende Verdrängerwirkung zu dem Instantheizkanal die jeweils momentane Gebrauchsmenge als einen oder mehrere Spritzer unmittelbar der Scheibenwischanlage zugeführt. Vorteilhafterweise wird die elektrische Heizung gesteuert, derart, dass Einschaltung und/oder Dauer der Einschaltung und/oder für erreichende Temperatur der Kleinmenge wählbar ist. Es wurde die interessante Beobachtung gemacht, dass je nach Belag auf der Scheibe unterschiedliche optimale Waschwassertemperaturen benötigt werden. Entgegen einer ersten Annahme ist im Winter vor allem bei Eis Wasser von 40 bis 60°C, also nur gut gewärmtes Wasser optimal. Verwendet man im kalten Winter Wasser nahe 100°C verdampft der grösste Teil, bevor es seine Wirkung auf der Scheibe gebracht hat. Im heissen Sommer ist dagegen eine Temperatur von 60 bis 80°C oder mehr von Vorteil, dadamit das Eiweiss der auf die Scheibe aufgeschlagenenn und zerplatzten Mücken besser beseitigt werden kann. Ein Wahlschalter für z.Bsp. 50, 70, 90°C ist deshalb sehr zweckmässig. Die neue Erfindung erlaubt die besondere Lösung den vorherrschenden klimatischen Verhältnissen anzupassen. Ist die Eisbildung kein eigentliches Problem, wie in südlichen Ländern, genügt die oben beschriebene Lösung. Wird aber doch mehr warmes Wasser benötigt, so wird vorgeschlagen, dass der Instantheizkanal als Primärkammer innerhalb eines Sekundärmantels angeordnet ist, zum Wärmetausch von dem Instantheizkanal in den Sekundärmantel, wobei der Sekundärmantel nach aussen wärmeisoliert wird. Die im Instantheizkanal erzeugte Wärme geht bei dieser Lösung nicht einfach an die Umgebung verloren, sondern wird in einen nach aussen isolierten Sekundärmantel gespeichert. Für das Nachrüsten von bestehenden Autos wird in diesem Fall die Instantheizkammer als Primärkammer innerhalb einer Sekundärkammer ausgebildet, welche mit einem Reservetank verbunden ist, dabei kann die Primärkammer und die Sekundärkammer als Baueinheit ausserhalb oder innerhalb des Reservetanks angeordnet werden. Die Primärkammer und die Sekundärkammer werden bevorzugt als vom Reservetank getrennte Baueinheit ausgebildet, wobei zwischen dem Reservetank und der Baueinheit eine Pumpe für die Waschflüssigkeit und die Baueinheit im Nahbereich der Scheibenwischanlage angeordnet ist. In allen Fällen wird aber vorgeschlagen, dass die Instantheizkammer oder die Baueinheit. mit der Instantheizkammer nach aussen wärmeisoliert ist.

Ferner wird vorgeschlagen die Ein- und Ausschaltung der elektrischen Heizung über das Zündschloss und/oder über einen Schalter zu betätigen, wobei die Steuerung der elektrischen Heizung getrennte Einstellmittel aufweist, für die Wahl der Temperatur des Waschwassers.

In erster Linie wird die Scheibenwischanlage der Frontscheibe eines Fahrzeuges erfindungsgemäss ausgebildet. Die Heckscheibe kann aber gleicherweise ausgerüstet werden. Grundsätzlich gilt ein gleiches für die Wischanlagen der Lampenreinigung. Hier ist aber das Problem nicht gleich, da von der Lampe selbst Wärme erzeugt und das Glas im Betrieb erwärmt wird. Für die Lampenreinigung wird deshalb im Normalfall kein warmes Wasser benötigt.

Eine besonders vorteilhafte Kombination liegt ferner darin, dass neben der Instantheizung des Waschwassers im Winter auch die Spritzdüsen unmittelbar beim Austritt geheizt werden, damit diese nicht vereisen und den Waschwasseraustritt blockieren. Wegen der Kleinheit der Spritzdüsen ist dafür nur eine sehr geringe zusätzliche Heizleistung erforderlich.

In der Folge wird die Erfindung an Hand einiger Ausführungsbeispiele mit weiteren Einzelheiten erläutert. Es zeigen:
- die Figur 1: eine Prinzipdarstellung einer Instantheizung für das Waschwasser einer Scheibenwischanlage;
- die Figur 1a: eine Doppelausführung der Instantheizung;
- die Figur 2: eine grössere Anlage mit einer Baueinheit mit Primär- und Sekundärmantel, bzw. Thermospeicher;
- die Figur 3: eine Waschanlage für Heck- und Frontscheibe;
- die Figur 4: die Baueinheit eingebaut in einem Reservetank für die Waschflüssigkeit.

In der Folge wird nun auf die Figur 1 Bezug genommen, welche vereinfacht eine erfindungsgemäss ausgerustete Scheibenwischanlage zeigt. Die Scheibenwaschflüssigkeit 1 ist in einem Reservetank 2 von z.Bsp. 2 bis 4 lt Inhalt eingefüllt. Der Reservetank 2 weist zum Einfüllen einen wegnehmbaren Deckel 3 auf. Im bodennahen Bereich ist am Reservetank 3 eine Ansaugöffnung 4 angebracht, von welcher die Waschflüssigkeit 1 über eine Druckpumpe 5 sowie eine Verbindungsleitung 6 einem Instantheizelement 7 zugeführt wird. Das Instantheizelement 7 besteht im wesentlichen aus einer Instantheizkammer 8 mit einem elektrischen Heizelement 9, welches an dem +Pol der elektrischen Stromversorgung des Fahrzeuges anschliessbar ist. Die Gegenseite des Heizelementes ist an die Masse M des Fahrzeuges anschliessbar. Das elektrische Heizelement 9 wird über eine elektrische Leitung 10 und eine elektrische Steuerung 11 ein- und ausgeschaltet. Die elektrische Steuerung ist dabei nur schematisch dargestellt, mit einem Einschalter 12, der z.Bsp. über das Zündschloss geführt sein kann. Ferner ist ein Ein/Ausschalter 13 für die elektrische Heizelemente 9 angeordnet, damit in der Zeit in der keine warme Waschflüssigkeit benötigt wird, nicht unnötig Strom in Wärme umgewandelt wird. Mit der Zahl 60 ist nur angedeutet, dass ein Wahlschalter vorgesehen werden kann, um den Temperaturbereich einzustellen. Die Steuerung kann jedwelchen zweckmässigen Aufbau haben und z.Bsp. auch Zeitelemente enthalten, damit die Heizung z.Bsp. intervallmässig nur nach einigen Minuten jeweils wieder eingeschaltet wird. Die Temperatur des Waschwassers wird mit einem Thermoelement 18 überwacht, so dass beim Erreichen der gewünschten Temperatur die Stromzuführung abgeschaltet wird. Das Instantheizelement weist einen äusseren Isolationsmantel 14 auf, damit die Wärme in der Instantheizkammer 8 nicht zu schnell an die Umgebung verloren geht. Das Instantheizelement kann relativ klein sein, z.Bsp. genügt ein Durchmesser von 2 bis 4 cm Durchmesser und einer Länge von etwa 10 bis 20 cm. Das Fassungsvermögen der Instantheizkammer ist in dem Bereich von z.Bsp. 10 bis 50 Kubikzentimetern. Die Kleineinheit hat den grossen Vorteil, dass das Instantheizelement 7 möglichst nahe an die Spritzdüse 15 der Scheibenwischanlage geführt werden kann. Mit einer Heizleistung von 70 Watt werden 5 bis 10 cm³ Wasser innert 5 bis 10 Sekunden auf 60 bis 80°C aufgeheizt. Damit kann nach Einschaltung der Heizung nach 10 Sekunden bereits 1 oder 2 mal die Scheibe mit warmem resp. heissem Wasser gereinigt werden. Die ganze Scheibenwischanlage ist stark vereinfacht mit einer Scheibe 16 und mit zwei Scheibenwischern 17, 17' dargestellt. Ebenfalls vereinfacht ist nur eine Spritzdüse 15 gezeichnet, obwohl im Regelfall zwei Spritzdüsen für eine Scheibe vorgesehen sind. Werden zwei oder mehr Spritzdüsen 15 für die selbe Scheibe eingesetzt, so können beide von dem selben Instantheizelement 7 gespiesen werden. Dabei kann es von Vorteil sein, ein doppelseitig wirksames Instantheizelement gemäss Figur la einzusetzen. Dabei wird das Wasser in der Mitte tangential eingeführt. An beiden Endseiten ist je ein Ausgang für das erhitzte Waschwasser angebracht. Das Instantheizelement 7 kann über Laschen 19 an dem Fahrzeug befestigt werden, damit es sich durch die Erschütterungen des Fahrzeuges nicht bewegt.

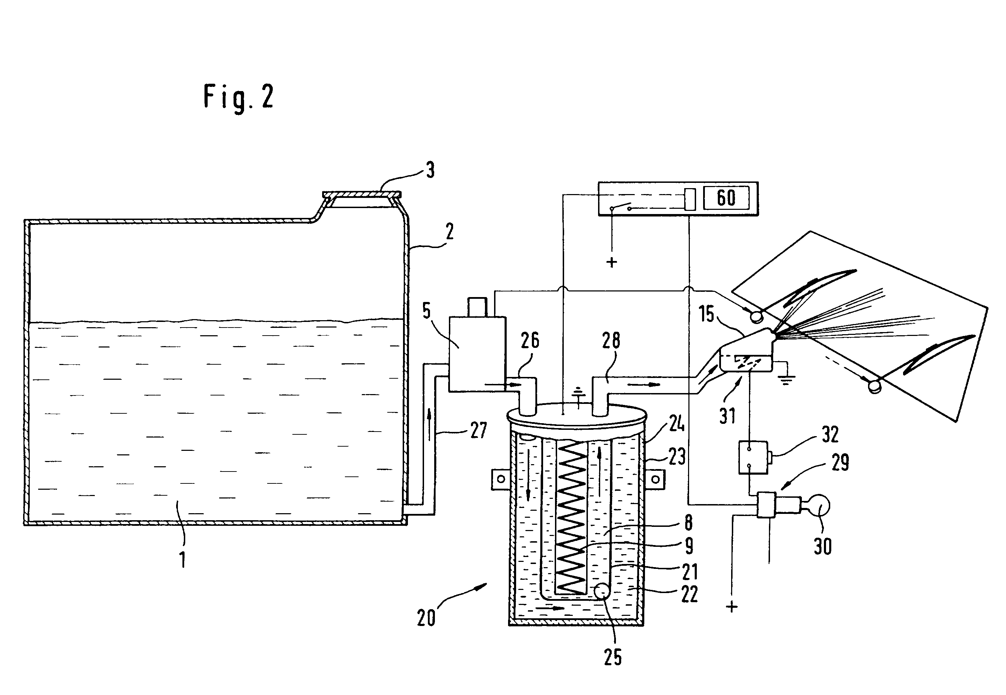

Die Figur 2 zeigt eine zweite Ausgestaltungsform der Erfindung, welche als Baueinheit 20 ausgebildet ist. Die Baueinheit 20 weist von innen nach aussen ein Instantheizelement 9 eine bevorzugt ringförmige Instantheizkammer 8 mit einer Kanalwand 21 sowie eine Sekundärheizkammer 22, welche in der Art einer Thermosflasche eine gute Isolation 24 aufweist. Die Isolation soll möglichst gut, aber wenn möglich nicht zerbrechlich sein. Im unteren Bereich der Baueinheit ist zwischen der Sekundärheizkammer 22 sowie der Instantheizkammer 8 ein Durchlass 25 für die Waschflüssigkeit 1. Zugeführt wird die Waschflüssigkeit 1 durch eine Pumpe 5 über einen Einlass 26. Der Reservetank weist irgend eine Bauform wie im Stand der Technik auf, bzw. ist im Falle der Nachrüstunq des bestehenden Reservetankes für die Waschflüssigkeit in dem Fahrzeug. Von dem Reservetank 2 wird eine Schlauchverbindung ?7 zu der Pumpe 5 geführt in den Fällen, in denen die Pumpe neu bei der Baueinheit angeordnet wird. Ist die Pumpe 5 bei dem Reservetank 2 direkt angeordnet so wird die entsprechende Verbindungsleitung wie in der Figur 1 ausgeführt. Ein Ausgang 28 aus der Instantheizkammer 8 wird direkt in die Spritzdüse 15 geführt. Die Erwärmung der Waschflüssigkeit in der Instantheizkammer 8 erfolgt in der Lösung gemäss Figur 2 nahezu gleich schnell wie gemäss Figur 1. Der Grund liegt darin, dass der Wärmeübergang im Falle eines elektrischen Heizelementes 9 in die Instantheizkammer 8 sehr viel schneller erfolgt, als der Wärmeübergang von der Instantheizkammer in die Sekundärheizkammer 22, dies wegen dem viel grosseren Temperaturgefälle zwischen den beiden Bereichen. Über eine Zeitdauer von 10 bis 15 Minuten gleicht sich aber, wenn die Scheibenwaschanlage nicht getätigt wird, die Temperatur in der Instantheizkammer 8 sowie in der Sekundärheizkammer 22 an. Je nach Konzeption der elektrischen Steuerung kann auf diese Weise entweder die nicht benötigte Wärme in der Instantheizkammer 8 auf einer tieferen Temperatur in dem ungefähr 1 bis 2 dl fassenden Sekundärheizkammer gespeichert werden, oder durch wiederholtes Nachheizen auch die Waschflüssigkeit in der Sekundärheizkammer auf die gewünschte Gebrauchstemperatur gebracht werden. Treten häufig Extremsituation mit einem grossen Bedarf an warmem oder heissem Wasser auf, ist die Lösung mit Sekundärheizkammer bzw. einer Thermoreserve von Vorteil. In der Figur 2 geschieht die Einschaltung der Heizelemente 9 über das Zündschloss 29 beim Einschalten mit dem Zündschlüssel 30. Bei der dargestellten Ausführung kann zusätzlich die Spritzdüse 15 über ein entsprechendes Heizelement 31 erwärmt werden, was im Falle einer Vereisungsgefahr wichtig sein kann. Im Sommerbetrieb kann das Heizelement 31 über einen Schalter ausgeschaltet werden.

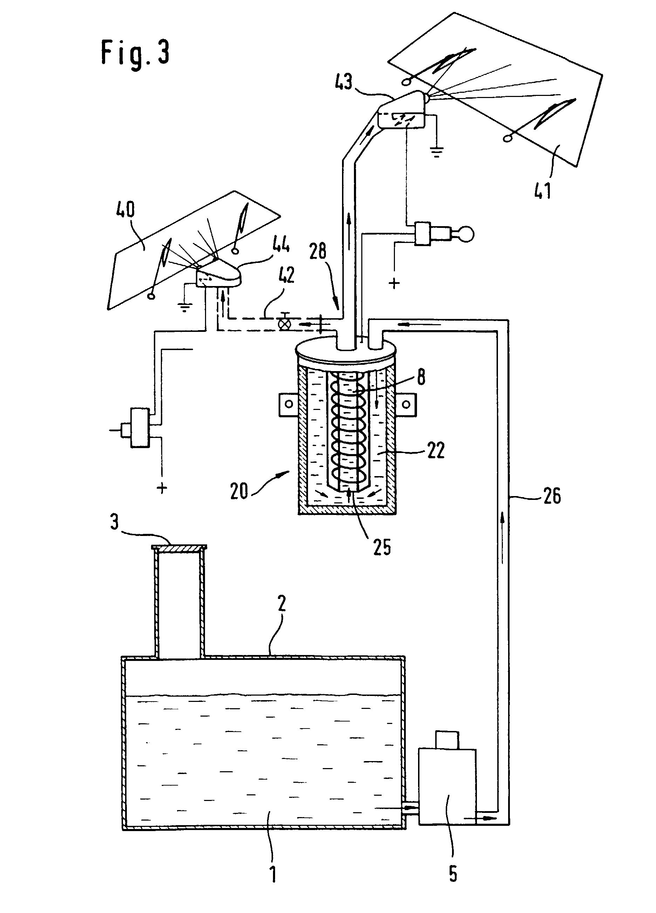

In der Folge wird nun auf die Figur 3 Bezug benommen. Die Figur 3 zeigt nur schematisch einen weiteren Ausgestaltungsgedanken. Dieser zeigt, dass neben der Frontscheibenwaschanlage 41 auch die Heckscheibenwaschanlage 40 in einer kombinierten Anlage erfindungsgemäss ausgebaut werden kann. Es ist dabei möglich, dass bei der Heckscheibe die Waschflüssigkeit dargestellt, nicht über die Heizelemente geführt wird. Mit der strichlierten Linie 42 ist angedeutet, dass der Ausgang 28 der Baueinheit 20 mit der Spritzdüse 43 und 42 verbunden werden kann. Im Falle, dass das Waschwasser sowohl für die Front- wie für die Heckscheibe erwärmt. werden soll, wird vorteilhafterweise an beiden Orten in möglichst grosser Nähe der jeweiligen Spritzdüse 15 ein Instantheizelement 7 gemäss Figur 1 angeordnet.

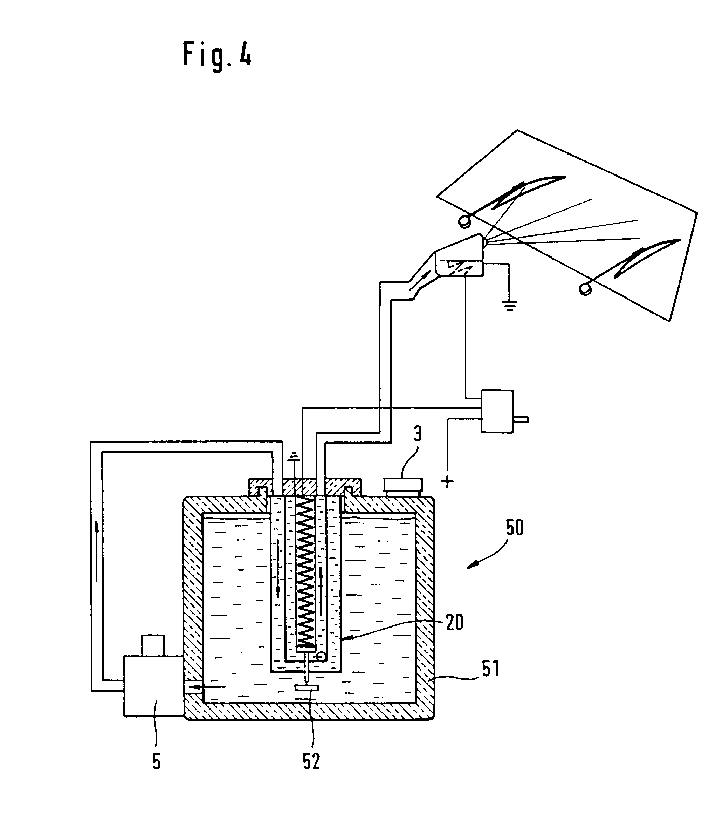

Die Figur 4 zeigt einen weiteren Ausgestaltungsgedanken, bei dem eine ganze Baueinheit 20 innerhalb eines Waschwasserreservetankes 50 angeordnet wird. Dabei wird bevorzugt der ganze Waschwasserreservetank 50 mit einer guten Isolation 51 eingefasst. Mit einem Schwimmer 52 kann dafür gesorgt werden, dass beim Absinken des Waschwassers unter ein bestimmtes Niveau, die Heizung nicht mehr einschaltbar ist. Nur schematisch ist die Pumpe 5 unten am Waschwasserreservetank angebracht. Diese kann auch mit der Baueinheit 20 kombiniert bzw. damit zusammengebaut werden, mit entsprechender Führung der Waschwasserzufuhr aus dem unteren Bereich des Waschwasserreservetankes 50.

## Patentansprüche

1. Thermal-Scheibenwaschanlage zur Erwärmung der Waschflüssigkeit für die Scheibenwischanlage von Fahrzeugen mit einem Instantheizelement (7) mit einer steuerbaren elektrischen Heizung sowie einem Reservetank (2) und einer Pumpe (5) für die Förderung der Waschflüssigkeit zu dem lnstantheizelement (7), dadurch gekennzeichnet, daß ein Ausgang (28) des Instantheizelementes (7) in großer Nähe einer Spritzdüse (15) angeordnet ist und Waschflüssigkeit als Kleinmenge dem Instantheizelement (7) zugeführt wird, wobei das Instantheizelement (7) zur Erwärmung der Kleinmenge auf eine Temperatur ausgebildet ist, die mindestens 30°C über der Umgebungstemperatur jedoch unter 100°C liegt.

2. Thermal-Scheibenwaschanlage nach Anspruch 1, dadurch gekennzeichnet, daß eine Instantheizkammer (8) des Instantheizelementes (7) als Primärkammer innerhalb einer Sekundärkammer (22) ausgebildet ist, welche mit dem Reservetank (2) verbunden ist.

3. Thermal-Scheibenwaschanlage nach Anspruch 2, dadurch gekennzeichnet, daß die Primärkammer und die Sekundärkammer (22) als Baueinheit außerhalb des Reservetanks (2) angeordnet sind.

4. Thermal-Scheibenwaschanlage nach Anspruch 2 oder 3, dadurch gekennzeichnet, daß die Primärkammer und die Sekundärkammer (22) als eine vom Reservetank (2) getrennte Baueinheit ausgebildet ist, wobei zwischen dem Reservetank (2) und der Baueinheit die Pumpe (5) für die Waschflüssigkeit und die Baueinheit im Nahbereich der Scheibenwaschanlage angeordnet ist.

5. Thermal-Scheibenwaschanlage nach einem der Ansprüche 2 bis 4, dadurch gekennzeichnet, daß die Instantheizkammer (8) oder die Baueinheit mit der Instantheizkammer (8) nach außen wärmeisoliert ist.

6. Thermal-Scheibenwaschanlage nach einem der Ansprüche 1 bis 5, dadurch gekennzeichnet, daß ein Instantheizkanal des Instantheizelementes (7) als Primärkammer innerhalb eines Sekundärmantels angeordnet ist, zum Wärmetausch von dem Instantheizkanal in den Sekundärmantel, wobei der Sekundärmantel nach außen wärmeisoliert ist.

7. Thermal-Scheibenwaschanlage nach einem der Ansprüche 1 bis 6, dadurch gekennzeichnet, daß die elektrische Heizung derart gesteuert wird, daß die Einschaltung und/oder die Dauer der Einschaltung und/oder die zu erreichende Temperatur der Kleinmenge wählbar ist

8. Thermal-Scheibenwaschanlage nach Anspruch 7, dadurch gekennzeichnet, daß die Ein- und Ausschaltung der elektrischen Heizung über das Zündschloß und/oder über einen Schalter erfolgt, wobei die Steuerung der elektrischen Heizung vorzugsweise Einstellmittel aufweist für die Temperatur des Waschwassers.

## Claims

1. Thermal windscreen washer system for heating the washing fluid for the windscreen wiper system of vehicles, with an instant heating element (7) having controllable electric heating and with a reserve tank (2) and a pump (5) for conveying the washing fluid to the instant heating element (7), characterized in that an outlet (28) of the instant heating element (7) is arranged in close proximity to a spray nozzle (15) and washing fluid is supplied as a small quantity to the instant heating element (7), the instant heating element (7) being designed to heat the small quantity to a temperature which is at least 30°C above the ambient temperature, but is below 100°C.

2. Thermal windscreen washer system according to Claim 1, characterized in that an instant heating chamber (8) of the instant heating element (7) is designed as a primary chamber within a secondary chamber (22) which is connected to the reserve tank (2).

3. Thermal windscreen washer system according to Claim 2, characterized in that the primary chamber and secondary chamber (22) are arranged as a structural unit outside the reserve tank (2).

4. Thermal windscreen washer system according to Claim 2 or 3, characterized in that the primary chamber and secondary chamber (22) are designed as a structural unit separate from the reserve tank (2), the pump (5) for the washing fluid being arranged between the reserve tank (2) and the structural unit, the structural unit being arranged in proximity to the windscreen washer system.

5. Thermal windscreen washer system according to one of Claims 2 to 4, characterized in that the instant heating chamber (8) or the structural unit together with the instant heating chamber (8) is thermally insulated relative to the outside.

6. Thermal windscreen washer system according to one of Claims 1 to 5, characterized in that an instant heating duct of the instant heating element (7) is arranged as a primary chamber within a secondary casing, for the purpose of heat exchange from the instant heating duct into the secondary casing, the secondary casing being thermally insulated relative to the outside.

7. Thermal windscreen washer system according to one of Claims 1 to 6, characterized in that the electric heating is controlled in such a way that the switch-on and/or the switch-on duration and/or the temperature of the small quantity which is to be reached can be selected.

8. Thermal windscreen washer system according to Claim 7, characterized in that the electric heating is switched on and off via the ignition lock and/or via a switch, the control of the electric heating preferably having setting means for the temperature of the washing water.

## Revendications

1. Installation de lave-glace thermique pour chauffer le liquide de lavage pour le système d'essuie-glace de véhicules avec un élément chauffant instantané (7) à chauffage électrique réglable ainsi qu'un réservoir (2) et une pompe (5) pour le transport du liquide de lavage à l'élément chauffant instantané (7), caractérisée en ce qu'une sortie (28) de l'élément chauffant instantané (7) est disposée à proximité immédiate d'un gicleur (15) et le liquide de lavage est fourni sous un faible débit à l'élément chauffant instantané (7), l'élément chauffant instantané (7) pour le chauffage du faible débit étant configuré à une température qui se situe au moins à 30°C au-dessus de la température ambiante mais en dessous de 100°C.

2. Installation de lave-glace thermique suivant la revendication 1, caractérisée en ce qu'une chambre de chauffage instantané (8) de l'élément chauffant instantané (7) constitue une chambre primaire à l'intérieur d'une chambre secondaire (22), qui est reliée au réservoir (2).

3. Installation de lave-glace thermique suivant la revendication 2, caractérisée en ce que la chambre primaire et la chambre secondaire (22) formant une unité structurelle sont disposées à l'extérieur du réservoir (2) .

4. Installation de lave-glace thermique suivant la revendication 2 ou 3, caractérisée en ce que la chambre primaire et la chambre secondaire (22) forment une unité structurelle séparée du réservoir (2), la pompe (5) pour le liquide de lavage étant disposée entre le réservoir (2) et l'unité structurelle et l'unité structurelle étant disposée à proximité de l'installation de lave-glace.

5. Installation de lave-glace thermique suivant l'une quelconque des revendications 2 à 4, caractérisée en ce que la chambre de chauffage instantané (8) ou l'unité structurelle avec la chambre de chauffage instantané (8) est thermiquement isolée vers l'extérieur.

6. Installation de lave-glace thermique suivant l'une quelconque des revendications 1 à 5, caractérisée en ce qu'un canal de chauffage instantané de l'élément chauffant instantané (7) est disposé en guise de chambre primaire à l'intérieur d'une enveloppe secondaire, pour l'échange de chaleur du canal de chauffage instantané vers l'enveloppe secondaire, l'enveloppe secondaire étant thermiquement isolée vers l'extérieur.

7. Installation de lave-glace thermique suivant l'une quelconque des revendications 1 à 6, caractérisée en ce que le chauffage électrique est réglé d'une façon telle que l'on puisse sélectionner la mise en marche et/ou la durée de la marche et/ou la température à atteindre du faible débit.

8. Installation de lave-glace thermique suivant la revendication 7, caractérisée en ce que la mise en marche et l'arrêt du chauffage électrique se font au moyen de la clé de contact et/ou au moyen d'un interrupteur, le réglage du chauffage électrique présentant de préférence des moyens d'ajustage pour la température de l'eau de lavage.
